# EUROPÄISCHE PATENTANMELDUNG

(11) **EP 4 518 145 A1**
(43) Veröffentlichungstag der Anmeldung: **05.03.2025**
(21) Anmeldenummer: 24195059.1
(22) Anmeldetag: 16.08.2024
(51) Int. Cl.: H02S 20/10, A01G 9/24

(54) **PHOTOVOLTAIKMODUL**

(30) Priorität: 30.08.2023 CH 9262023
(71) Anmelder: MABEWO Greentocube AG, 6403 Küssnacht am Rigi (CH)
(72) Erfinder: GRAESS, Harald, 6403 Küssnacht am Rigi (CH)

(57) **Zusammenfassung**

Die Erfindung betrifft ein Photovoltaikmodul zur Erzeugung von Energie, insbesondere im gewerblichen Einsatz und besonders geeignet für einen Einsatz in der Landwirtschaft und in Gärtnereien. Zur Verfügung gestellt werden soll ein Photovoltaikmodul (PM), das geeignet ist, Sonnenlicht optimal zu nutzen. Hierzu umfasst es mindestens ein transparentes Flächenelement, welches beidseitig mit einer transparenten und lichtempfindlichen Schicht versehen ist.

## Beschreibung

Die Erfindung betrifft ein Photovoltaikmodul zur Erzeugung von Energie, insbesondere im gewerblichen Einsatz und besonders geeignet für einen Einsatz in der Landwirtschaft und in Gärtnereien.

Klimawandel und Zunahme der Weltbevölkerung stellen die Energie-,Trink- und Brauchwasserversorgung insbesondere in armen Ländern und Regionen mit schwacher Infrastruktur vor immer grössere Herausforderungen, die mit konventionellen Technologien aufgrund des Investitionsbedarfs und der Umweltfolgen kaum zu bewältigen sind.

Vertikal auf dem Erdboden angeordnete Photovoltaikzellen sind bekannt, ebenso deren mögliche Verstellung nach dem Sonnenstand. Nicht jedoch die Gesamtanordnung und deren Anwendungsumfang, so dass auch hier die Neuheit gegeben wäre.

In der EP 2419585 B1 ist ein Ankersystem beschrieben, das es ermöglicht, ebene Flächenelemente, insbesondere herkömmliche Photovoltaikelemente, oberhalb des Erdbodens und auch an Schräglagen anzubringen.

Beschrieben ist ein Bodenanker mit drei schräg stehenden Stützen. Diese sind in länglichen Elementen an einer Stützfläche geführt, weisen also einen dadurch vorgegebenen Winkel auf. Dabei sollen Austrittsenden der länglichen Elemente im Einsatz in Berührung mit dem Boden angeordnet sein.

Damit können Photovoltaikelemente einzeln oder in Photovoltaikparks aufgestellt werden.

In der DE 102004015728 A1 ist eine einfach aufgebaute Vorrichtung zur autarken Wassergewinnung aus der Luftfeuchtigkeit gezeigt. Ohne elektrische Hilfsmittel soll es möglich sein, ca. 1I Wasser je Quadratmeter Anlagenfläche (Folien) aus der Luft abzuscheiden. Hierzu wird Umgebungsluft am Tag durch Erwärmung der Vorrichtung angesaugt und ein an einem, nachts ausgekühlten Kondensator unterhalb des Taupunkts gekühlt. Der gekühlte Luftstrom wird je nach Temperatur gedrosselt und nach Ablauf des Kondensationsprozesses mittels Gegenstrom mit der zugeführten Luft erwärmt. Dies ist nur für Einzelhaushalte o. dgl. geeignet.

Die Aufgabe der Erfindung besteht deshalb darin, die Nachteile des Standes der Technik zu überwinden und ein Photovoltaikmodul zur Erzeugung von Energie, insbesondere im gewerblichen Einsatz und besonders geeignet für einen Einsatz in der Landwirtschaft und in Gärtnereien zu entwickeln, das geeignet ist, Sonnenlicht optimal zu nutzen.

Die Aufgabe ist mit den kennzeichnenden Merkmalen des Patentanspruchs 1 gelöst.

Das erfindungsgemässe Photovoltaikmodul umfasst mindestens ein transparentes Flächenelement, das beidseitig mit einer transparenten und lichtempfindlichen Schicht versehen ist und welches bevorzugt in einem Gestell angeordnet ist.

Bevorzugte Ausgestaltungen der erfindungsgemässen Anlage sind in den abhängigen Ansprüchen offenbart.

Vorteilhaft umfasst das erfindungsgemässe Photovoltaikmodul mindestens zwei und vorzugsweise drei voneinander beabstandete und parallel zueinander angeordnete transparente Flächenelemente, die jeweils beidseitig eine transparente und lichtempfindliche Schicht aufweisen.

Vorzugsweise sind mehrere Module in einer Reihe angeordnet und vorteilhaft sind drei voneinander beabstandete und parallel zueinander angeordnete Flächenelemente vorgesehen, die bevorzugt Glas- oder Kunststoffplatten sind.

Die Flächenelemente sind im Wesentlichen parallel und/oder senkrecht zum Boden angeordnet.

Vorteilhaft können die parallel zum Boden angeordneten Flächenelemente winklig zum Boden geneigt angeordnet sind, dabei auch in zwei Reihen nebeneinander und zueinander geneigt angeordnet sein, um zusätzlich Wasser zu sammeln.

Die Platten aus Glas oder Kunststoff sind beidseitig mit mindestens einer Schicht aus photovoltaischem Material belegt ("Dünnschicht-Solarzellen"), zum Beispiel aufgedampft. Für solche lichtempfindlichen Schichten sind Schichtdicken von 1-5 Mikrometern ausreichend.

Das erfindungsgemässe Photovoltaikmodul ermöglicht zudem bei entsprechender Anordnung eine Belüftung/Beschattung von Pflanzen und/oder auch deren Bewässerung mit Tau oder Regenwasser.

Die Pflanzen können Kräuter, Gemüse, Beerensträucher, niedrige Obstbäume o. a. sein.

Die Erfindung wird nachfolgend in einem Ausführungsbeispiel anhand einer Zeichnung näher beschrieben. In der Zeichnung zeigen die
Fig. 1: in einer Reihe angeordnete erfindungsgemässe Photovoltaikmodule;
Fig. 2: ein Detail des Photovoltaikmoduls nach Fig. 1.

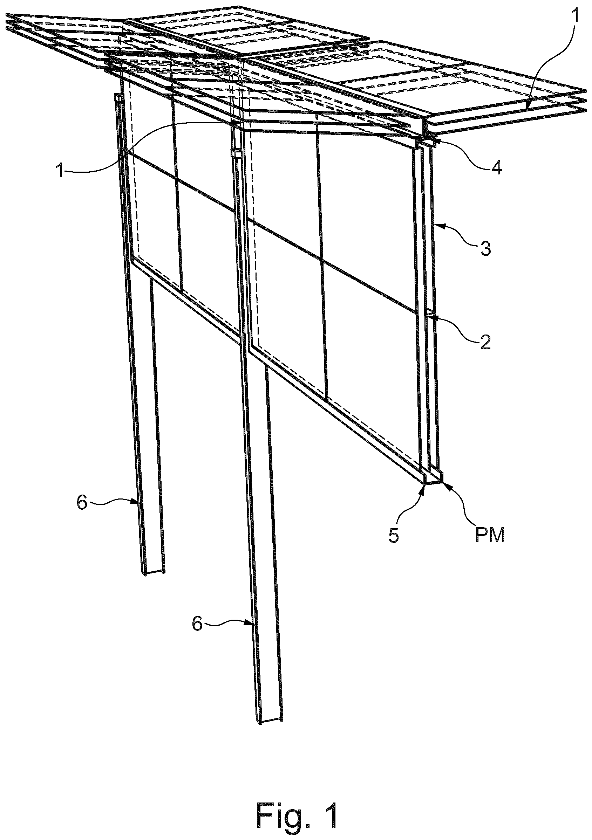

In einer Reihe angeordnete erfindungsgemässe Photovoltaikmodule PM sind in der Fig. 1 in einer Ausführungsform perspektivisch dargestellt. Hierbei sind die Photovoltaikmodule PM sowohl im Wesentlichen horizontal als auch vertikal angeordnet.

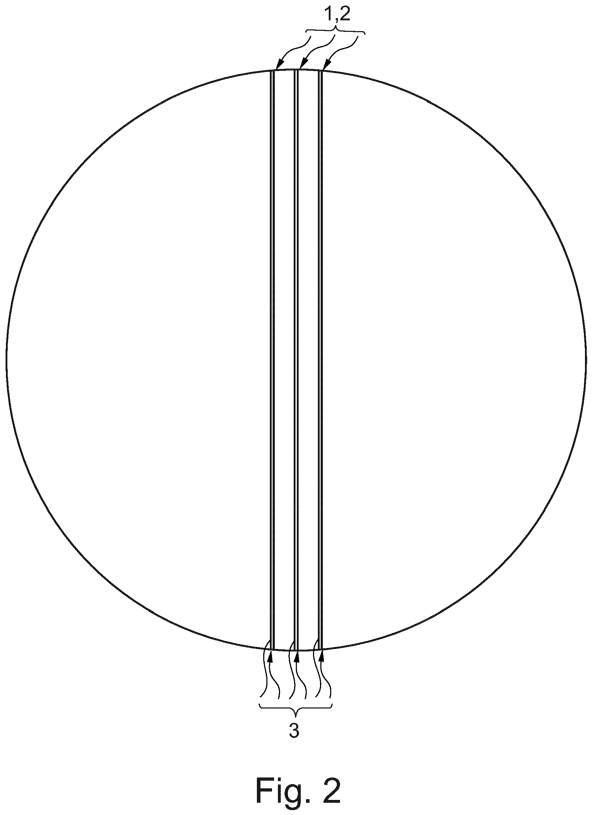

Jedes Photovoltaikmodul PM umfasst im Beispiel drei voneinander beabstandete und parallel zueinander angeordnete Flächenelemente, die bevorzugt aus Glasplatten 1, 2 gebildet sind. Jede Glasplatte 1, 2 weist beidseitig eine Schicht 3 aus einem aufgedampftem lichtempfindlichen, photovoltaischen, Material auf (Fig. 2). Die Schichten 3 sind in üblicher und daher nicht dargestellten Weise elektrisch verbunden und mit einem elektrischen Verbraucher oder Speicher gekoppelt.

Das Sonnenlicht ist so optimal nutzbar. Zudem können die Glasplatten 1, 2 auch noch sonnenlichtabhängig farbverändernd ausgestattet sein, um ggf. eine Beschattung von Pflanzen zu ermöglichen.

Der Abstand zwischen den Glasplatten 1, 2 beträgt zum Beispiel 2-5cm.

Jede Glasplatte 1, 2 ist in mindestens einem Querträger 3, 4 eines Gestells aufgenommen. Die vertikal angeordnete Glasplatten 2 sind zwischen zwei Querträgern 5 angeordnet.

Die im Wesentlichen horizontal angeordneten Glasplatten 1sind im Beispiel zueinander und in Richtung auf den sie aufnehmenden Querträger 4 um 1-5° geneigt, um Tau und Regenwasser auf darunter befindliche Pflanzen zu leiten.

An den Querträgern 5 sind zudem Längsträger 6 angeordnet, die der Verankerung der Photovoltaikmodule PM im Boden eines Beetes oder eines Feldes dienen.

Vorteilhaft können mehrere Reihen von Photovoltaikmodulen PM parallel zueinander angeordnet sein (nicht explizit dargestellt), zwischen denen dann Pflanzen befindlich sind.

### Aufstellung der verwendeten Bezugszeichen

- 1: Glasplatte
- 2: Glasplatte
- 3: Schicht
- 4: Querträger
- 5: Querträger
- 6: Längsträger
- PM: Photovoltaikmodul

## Patentansprüche

1. Photovoltaikmodul zur Erzeugung von Energie, insbesondere im gewerblichen Einsatz und besonders geeignet für einen Einsatz in der Landwirtschaft und in Gärtnereien, welches mindestens ein Flächenelement umfasst, das in einem Gestell angeordnet ist, **dadurch gekennzeichnet, dass** das mindestens eine Flächenelement transparent und beidseitig mit einer transparenten und lichtempfindlichen Schicht versehen ist.

2. Photovoltaikmodul nach Anspruch 1, **dadurch gekennzeichnet, dass** es mindestens zwei und bevorzugt drei voneinander beabstandete und parallel zueinander angeordnete transparente Flächenelemente umfasst, die jeweils beidseitig mit einer transparenten und lichtempfindlichen Schicht (3) versehen sind.

3. Photovoltaikmodul nach Anspruch 1 oder 2, **dadurch gekennzeichnet, dass** mehrere Module in Reihe angeordnet sind.

4. Photovoltaikmodul nach einem der Ansprüche 1 bis 3, **dadurch gekennzeichnet, dass** drei voneinander beabstandete und parallel zueinander angeordnete Flächenelemente vorgesehen sind, die bevorzugt aus Glas oder Kunststoff bestehen.

5. Photovoltaikmodul nach einem der Ansprüche 1 bis 4, **dadurch gekennzeichnet, dass** die Flächenelemente im Wesentlichen parallel und/oder senkrecht zum Boden angeordnet sind.

6. Photovoltaikmodul nach Anspruch 5, **dadurch gekennzeichnet, dass** die parallel zum Boden angeordneten Flächenelemente winklig zum Boden geneigt angeordnet sind.

7. Photovoltaikmodul nach Anspruch 5, **dadurch gekennzeichnet, dass** die Flächenelemente in zwei Reihen und zueinander geneigt angeordnet sind.
